# EUROPEAN PATENT APPLICATION

(11) **EP 1 826 188 A1**
(43) Date of publication of application: **29.08.2007**
(21) Application number: 05806198.7
(22) Date of filing: 10.11.2005
(51) Int. Cl.: C03C 27/12, B32B 17/10, B60J 1/00

(54) **CURVED LAMINATED GLASS AND VEHICLE FIXED WITH THE CURVED LAMINATED GLASS**

(30) Priority: 10.11.2004 JP 2004326842
(71) Applicant: Nippon Sheet Glass Company Limited, Tokyo 108-6321 (JP)
(72) Inventor: KAWAGUCHI, Jun, c/o NIPPON SHEET GLASS COMPANY LTD, Tokyo 108-6321 (JP); SHIMOMURA, Takahiro, c/o NIPPON SHEET GLASS CO LTD, Tokyo 108-6321 (JP)
(74) Representative: Intes, Didier Gérard André
(86) International application number: PCT/JP2005/020600
(87) International publication number: WO 2006/051852

(57) **Abstract**

A curved laminated glass having no natural vibration in the low frequency region of 500 Hz or lower is fitted to a vehicle body, so that the curved laminated glass is prevented from resonating with the vehicle body. A resin interlayer film that bonds two curved glass sheets to each other to allow a curved laminated glass to be obtained is, for instance, a film with a three-layer structure (sound insulation film) including polyvinyl butyral films and a polyvinyl n-octylal film interposed therebetween. The resin interlayer film to be used is a soft film having a Shore hardness of 75 degrees or less at 20°C.

## Description

### Technical Field

The present invention relates to a curved laminated glass for a vehicle that tends not to generate low frequency muffled noise inside a vehicle while it is moving, and a vehicle fitted with the same.

### Background Art

Laminated glasses, each of which includes two glass sheets bonded to each other with a resin interlayer film, are used widely as window glasses for vehicles such as automobiles, etc. With strong demands for improving interior comfort with respect to noise inside automobiles in recent years, it is becoming increasingly important that front window glasses (or windshields) have high noise insulation performance.

Noise inside an automobile is promoted, with vibration noise generated from drive systems such as an engine, an axle part, etc. undergoing cavity resonance with a space inside the automobile serving as a resonance space. Especially, film vibration in which a large-area flat part such as a window glass undergoes elastic vibration promotes muffled noise with high sound pressure and thereby reduces sound comfort in the interior space of an automobile. That is, since the interior space of an automobile is a sort of cavity partitioned by window glasses and an automobile body, cavity resonance noise (muffled noise) may be generated that is accompanied by a sense of muffled noise caused by vibrations of the window glasses and automobile body. In order to prevent this from occurring, a method of preventing cavity resonance of the automobile body from occurring by sufficiently increasing the mass of window glasses is considered. However, this is not preferable since it increases the weight of the automobile.

JP10(1998)-28712A discloses the following method as a method of reducing the muffled noise inside an automobile caused by a laminated glass. That is, a piezoelectric transducer that are provided for the peripheral part of a window glass in such a manner as to adhere closely thereto and a control means for controlling the amount of strain of the piezoelectric transducer are provided. The control means allows the piezoelectric transducer to have internal stress generated in the direction of restraining the strain caused by the elastic vibration generated in the window glass.

Furthermore, JP5(1993)-310039A discloses a method of reducing muffled noise inside an automobile by increasing the rigidity of the window glass for automobiles including two glass sheets bonded and laminated together with an interlayer film being interposed therebetween, and controlling the resonant frequency of the glass to prevent the glass from vibrating. In order to increase the rigidity of the window glass, a glass surface that has a bow shape in the vertical direction is formed so that the bow shape has a height of at least 3 to 30 mm.

In addition, JP7(1995)-186714A discloses a method of preventing muffled noise from being generated inside an automobile by fitting a window glass to the body thereof so that the window glass vibrates at a resonant frequency substantially corresponding to the cavity resonant frequency in the space inside the automobile, and thereby allowing the window glass to serve as a dynamic damper with respect to the cavity resonance.

### Disclosure of Invention

A glass including two glass sheets bonded to each other with a resin interlayer film is used for front window glasses (or windshields) of automobiles due to regulations. In an automobile with this laminated glass fitted as a front window glass, noise inside the automobile (muffled noise in a room) is generated, with various vibrations being mixed together, such as wind roar, vibration noise from an engine part, natural vibration transmitted from an axle part, and furthermore, natural vibration noise generated by the window glass itself. This causes a deterioration of the comfortable environment in terms of sound inside an automobile. The inside of the automobile forms a resonant space surrounded by a ceiling panel, front, rear, and side window glasses, a back panel that divides a space inside the automobile and a baggage compartment, a floor panel, a dash panel, etc. Especially, when a plate-like body with a comparatively large area like a front window glass has natural vibration, it causes the generation of muffled noise that deteriorates comfort inside an automobile to a considerable degree.

Human beings have a very high sense of hearing at a frequency in the range of 1000 Hz to 6000 Hz as compared to the other range. Accordingly, a technique of reducing the deterioration in noise insulation, the deterioration being derived from a coincidence effect, with respect to a sound range in a frequency range of 1000 to 4000 Hz around a frequency of about 2000 Hz has contributed to the improvement in comfort in terms of sound inside an automobile to some extent. However, the improvement has not necessarily been made to a satisfactory level. Hence, in order to improve further the comfortable environment inside an automobile, a reduction also has been required with respect to the low-pitched muffled noise inside the automobile relating to a front window glass.

In order to improve the comfort inside an automobile, various improvements have been made. For instance, according to the method of preventing muffled noise from being generated inside an automobile that is disclosed in JP10(1998).287127A described above, there is an advantage that the vibration of a window glass can be suppressed reliably. However, it is necessary to dispose a piezoelectric transducer and an electric circuit for controlling it in the peripheral portion of the glass. Accordingly, there are problems in that the appearance of the window glass is impaired and the cost increases.

Furthermore, the method disclosed in JP5(1993)-310039A described above is simple. However, there are problems in that the curved shape of the window glass is restrained and the effect of suppressing the natural vibration of the glass is not sufficiently high.

Moreover, the method disclosed in JP7(1995)-186714A described above has a problem in that a special supporting structure is required for fitting and fixing a window glass to an automobile body.

The present invention was made to obtain a sound space inside a vehicle that is more comfortable. Particularly, the present invention is intended to provide a curved laminated glass for a vehicle that does not cause or tends not to cause low-pitched muffled noise inside a vehicle, and a vehicle fitted with the same.

The present inventors found that in order to improve the sound comfort (comfort in terms of sound) in a space of a vehicle while it was moving when a laminated glass was fitted and fixed to a vehicle body as a front window glass, it was important to reduce muffled noise that was generated due to the interaction between the natural vibration property of a front window glass and natural vibration specific to an automobile body that was caused while it was moving. That is, the present inventors found that it was important to determine the vibration property of the laminated glass so that the natural vibration of the laminated glass and the natural vibration of the vehicle body do not interfere mutually. Thus, the present invention was completed.

In other words, the present invention provides a curved laminated glass for a vehicle including two curved glass sheets and a resin interlayer film that is interposed between the two curved glass sheets and bonds the two curved glass sheets to each other. In the curved laminated glass for a vehicle, the resin interlayer film has a Shore hardness of 75 degrees or less at 20°C that is obtained by a durometer measurement. The curved laminated glass for a vehicle has no natural vibration in the low frequency region of 500 Hz or lower in an audible range.

Furthermore, the present invention also provides a vehicle including the aforementioned curved laminated glass for a vehicle as a windshield.

According to the above-mentioned curved laminated glass for a vehicle of the present invention, the resin interlayer film is formed of a film that is relatively soft, specifically with a Shore hardness of 75 degrees or less, and the curved laminated glass for a vehicle has no natural vibration in the low frequency region. Accordingly, the natural vibration of the laminated glass and the natural vibration in the low frequency region of the vehicle body do not overlap and resonate with each other in practical use of a vehicle with the laminated glass being fitted to the vehicle body. Thus muffled noise caused continuously in a space can be prevented from being generated. This allows comfort inside a vehicle to improve.

According to the vehicle of the present invention, since the above-mentioned curved laminated glass for a vehicle of the present invention is fitted, muffled noise in a room is prevented from being generated while it is moving and thereby the comfortableness inside a vehicle is improved.

### Brief Description of Drawings

FIG. 1A is a schematic sectional view of a laminated glass of the present invention.
FIG. 1B is a schematic sectional view showing another embodiment of a laminated glass of the present invention.
FIG. 2 is a graph showing a natural vibration property of the laminated glass according to the present invention.
FIG. 3 is a graph showing hardness of resin interlayer films.
FIG. 4 is a graph showing a natural vibration property of a laminated glass according to a conventional technique.

### Description of the Preferred Embodiments

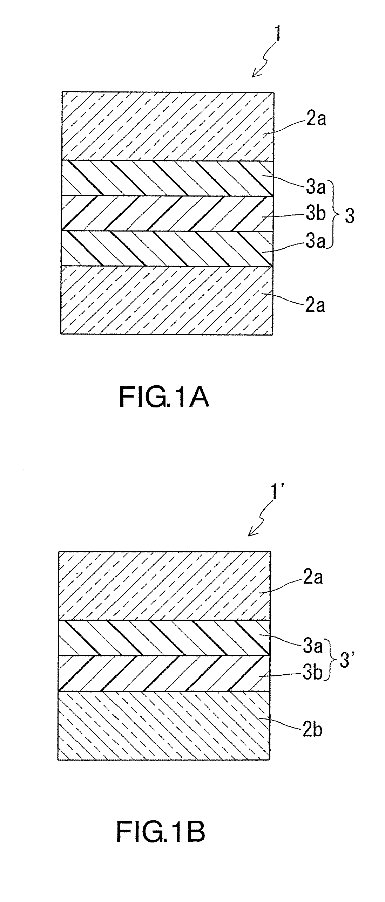

Embodiments of the present invention are described with reference to the drawings as follows. FIG. 1A and 1B is a schematic sectional view of a curved laminated glass for a vehicle (also referred to simply as "laminated glass") of the present invention. The laminated glass 1 of the present invention shown in FIG. 1A includes two curved glass sheets 2a, 2a (also referred to simply as "glass sheets") that are bonded to each other with a resin interlayer film 3. The glass sheets 2a, 2a are float glass sheets having a soda-lime silica composition. They have been bent into a predetermined shape so that they can be fitted and fixed to an automobile body form when they are to be used for a front window glass of an automobile. The resin interlayer film 3 shown in FIG. 1A has a three-layer structure including two polyvinyl acetal resin films 3a, 3a having high adhesiveness with respect to the glass sheets 2a, 2a and a polyvinyl acetal resin film 3b having a lower hardness (Shore hardness) than that of the two polyvinyl acetal resin films 3a, 3a, with the polyvinyl acetal resin film 3b being interposed therebetween. In this specification, polymers with aldehyde condensed to the hydroxyl group of polyvinyl alcohol are referred to as "polyvinyl acetal" generically.

The resin films 3a that are brought into direct contact with the glass sheets 2a, 2a are resin films obtained by acetalizing polyvinyl alcohol with a first aldehyde whose main component is an aldehyde having a carbon number of 2 to 4, for example. On the other hand, the resin film 3b is a resin film obtained by acetalizing polyvinyl alcohol with a second aldehyde whose main component is an aldehyde having a carbon number of 6 to 8, for example. Thus, the resin interlayer film 3 can be obtained that has high adhesiveness with respect to the glass sheets, is soft as a whole, and tends not to generate muffled noise.

The "main component" denotes a component whose content is the largest by mol%.

For instance, the resin films 3a can be obtained by acetalizing polyvinyl alcohol, and aldehyde to be used for acetalization can be one of acetaldehyde, propionaldehyde, n-butyraldehyde, etc. or a combination of two or more of them. Especially, a resin film (polyvinyl butyral film) obtained by acetalizing (co-acetalizing) polyvinyl alcohol with aldehyde containing n-butyraldehyde alone or n-butyraldehyde as its main component is preferable because it has high adhesiveness to the glass sheets and high penetration resistance.

The resin film 3b can be obtained by acetalizing polyvinyl alcohol. The aldehyde to be used for acetalization can be one of aliphatic aldehydes such as n-hexyl aldehyde, 2-ethyl butyraldehyde, n-heptyl aldehyde, n-octyl aldehyde, etc. or a combination of two or more of them. Particularly, a resin film (polyvinyl n-octylal film) obtained by acetalizing (co-acetalizing) polyvinyl alcohol with aldehyde containing n-octyl aldehyde alone or n-octyl aldehyde as its main component is preferable because it has suitable flexibility.

Examples of the method of preparing these polyvinyl acetal films that can be employed herein include a known method of obtaining resin powder of polyvinyl acetal by dissolving polyvinyl alcohol in heated water and adding aldehyde and an acid catalyst thereto to allow an acetalization reaction to proceed. Monobasic acid ester such as triethylene glycol or polybasic acid ester such as adipic acid is added to the resin powder as a plasticizer, which then is kneaded. The kneaded product thus obtained is formed in the shape of a film by a known method such as a pressing method. Both the two glass sheets 2a may be inorganic glass sheets such as float glasses or one of them may be formed of a transparent resin glass sheet, for instance, a transparent resin glass sheet made of acrylic resin in order to reduce the weight.

The resin interlayer film can contain other additives such as an ultraviolet absorber, and other resins.

Furthermore, from another aspect, the present invention provides a curved laminated glass for a vehicle including two curved glass sheets and a resin interlayer film that is interposed between the two curved glass sheets and bonds the two curved glass sheets to each other. The resin interlayer film includes: two resin films, each of which contains polyvinyl acetal as its main component that is obtained by acetalizing polyvinyl alcohol with an aldehyde having one of carbon numbers of 2 to 4; and a resin film containing polyvinyl acetal as its main component that is obtained by acetalizing polyvinyl alcohol with an aldehyde having one of carbon numbers of 6 to 8. Since it is meaningless to express the amount of polymers with the number of moles, the "main component" of the resin films shall denote a component whose content is the largest by mass%.

FIG. 1B is a schematic sectional view showing another embodiment of the laminated glass according to the present invention. The glass sheet 2a, which is one of two glass sheets of the laminated glass 1', is a float glass sheet having a soda-lime silica composition. On the other hand, the other glass sheet 2b is a glass sheet made of resin such as acrylic resin. The resin interlayer film 3' has a two-layer structure. When one of the glass sheets is a resin glass sheet, it is advantageous that a resin film 3a obtained using aldehyde whose main component is n-butyraldehyde for acetalization is disposed on the float glass sheet 2a side, while a resin film 3b (a softer film) obtained using aldehyde whose main component is n-octyl aldehyde for acetalization is disposed on the resin glass sheet 2b side.

The number of natural vibrations of a front window glass relates to the size, thickness, and curved shape of the laminated glass and also relates to the hardness and thickness of the resin interlayer film that bonds the two glass sheets to each other. In order to obtain a laminated glass that does not have conspicuous natural vibration in a low frequency region, it is necessary to select suitably the parameters and sizes of materials forming such laminated glasses. Particularly, the hardness of the resin interlayer film is important. On the other hand, the magnitude (amplitude) and frequency of the natural vibration of a vehicle body are determined by the structure of the vehicle body frame, a method of fitting door parts, and various component parts such as an engine part, a transmission part, a rotating shaft that transmits power from an engine to wheels, wheel parts, etc.

When a laminated glass that has been fitted and fixed as a front window glass has a natural vibration with a relatively narrow half width (with respect to frequency) in a low frequency region of 500 Hz or lower and the natural vibration overlaps with that of a vehicle body in a low frequency region, low-pitched noise is generated continuously in a room while the vehicle is moving. That is, muffled noise increases. Hence, in order to improve the sound environment inside a vehicle while it is moving, it is important to prevent the front window glass and the vehicle body from resonating with each other.

Usually, 2.0-mm thick float glass having a soda-lime silica composition is employed for two glass sheets that are used for forming a front window glass for an automobile. Accordingly, the property relating to the number of natural vibrations of the front window glass often depends on the resin interlayer film and the curved shape.

The hardness of the polyvinyl acetal resin interlayer film can be adjusted by suitably selecting a polymerization degree of polyvinyl alcohol, which is a starting material, an acetalization degree, the type of aldehyde material to be used for acetalization, a selection of co-acetalization or single acetalization with a single type of aldehyde, the type and ratio of a plasticizer to be added, etc. In addition, the peripheral shape of the laminated glass is defined by the shape of a window frame of the body, and the laminated glass generally is bent to be used as a front window glass. The front window glass can have hardness that is improved by being bent to have curvatures in both directions, i.e. a width direction and vertical direction of the front window glass, and thereby the number of natural vibrations can be adjusted.

### EXAMPLES

### Example 1

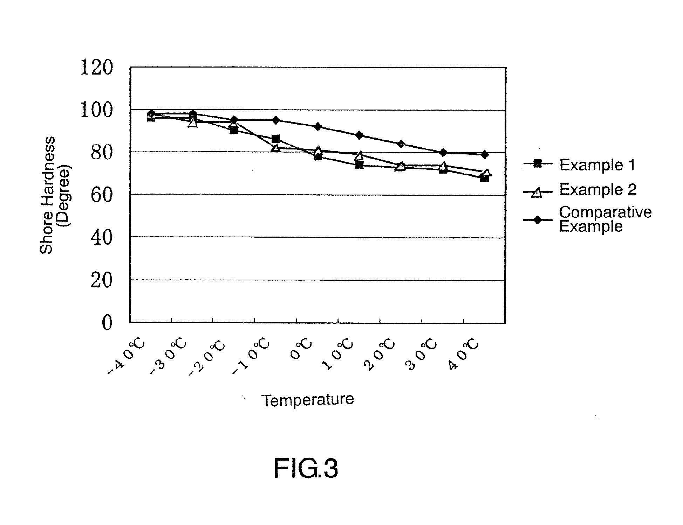

A laminated glass was produced by interposing a 0.76-mm thick resin interlayer film between two 2.0-mm thick glass sheets that had been bent, and heating them in an autoclave. The resin interlayer film used herein had a three-layer structure including two polyvinyl butyral films and a polyvinyl n-octylal film (a film obtained by acetalizing polyvinyl alcohol with an aldehyde whose main component was n-octyl aldehyde) interposed therebetween. The results of measurement of the Shore hardness at 20°C of the resin interlayer film of the laminated glass that was carried out by a durometer measurement are indicated with black square marks in FIG. 3. The Shore hardness at 20°C was 74 degrees, while it varied in the range of 81 to 72 degrees in the temperature range of 0 to 40°C. The resin interlayer film had a property that the hardness thereof decreased with an increase in temperature while increasing with a decrease in temperature.

The Shore hardness measurement was carried out with a plurality of resin interlayer films to be measured being stacked together to obtain the thickness required for the measurement. Furthermore, a measuring apparatus according to Japanese Industrial Standards (JIS) K6253 (Hardness testing methods for lubber, vulcanized or thermoplastic) and American Society for Testing and Materials (ASTM) D2240 (Standard Test Method for Rubber Property - Durometer Hardness) was used for the Shore hardness measurement.

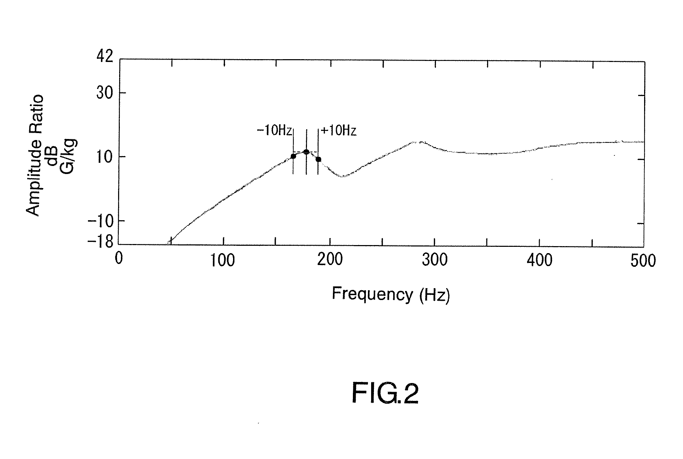

The natural vibration property in a low frequency region of this laminated glass was determined by the following method. First, a laminated glass that had been bent into a predetermined shape was placed on a soft air tube with a sufficiently large size, with the concave face thereof facing upward. Then an acceleration pickup was fixed onto the concave face of the glass sheet with tape. Thereafter, the laminated glass was struck with an impulse hammer, and the vibration force signals of the impulse hammer and the response acceleration signals of the acceleration pickup were input to an FFT analyzer (fast Fourier transform analyzer). Thus the natural vibration property was determined. FIG. 2 shows the natural vibration property of the laminated glass thus obtained. FIG. 2 shows the natural vibration property (vertical axis: acceleration amplitude ratio (accelerance), horizontal axis: frequency) in the low frequency region (20 Hz to 500 Hz) in the audible region that was obtained with a vibration measuring apparatus (manufactured by ONO SOKKI CO., LTD.). The natural vibration property of this laminated glass had merely a broad convex rise with respect to frequencies around 200 Hz and 300 Hz. No level of generation of vibration or sound in the range of 200 to 300 Hz of frequencies discordant to human beings was determined. In addition, vibration with a narrow half width as described later in the comparative example was not observed.

It should be noted that, it is difficult to find the half width with respect to the broad convex rise like the one shown in FIG. 2. Hence, in the present specification, the presence of the natural vibration in a low frequency region of 500 kHz or lower is judged by the following criterion instead of the half width. That is, in the spectrum of the natural vibration property obtained by the above-mentioned measurement method, when three or more peaks where the magnitude of change in acceleration amplitude ratio is at least 3.0 dB between the frequency of the peak and the frequency 10 Hz higher or lower than that do not exist (preferably, there is no peak), it is judged that the laminated glass has no natural vibration.

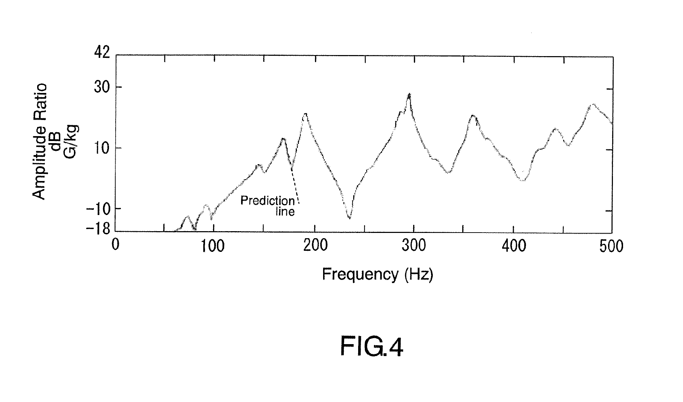

In the natural vibration property (FIG. 2) of the laminated glass according to Example 1, broad peaks are observed at 183 Hz and 286 Hz. However, the difference (the magnitude of change) between the acceleration amplitude ratios at the frequencies of the broad peaks and those at the frequencies ± 10 Hz apart therefrom was checked and as a result, even the maximum difference was small, specifically 1.67dB, as shown in Table 1. Thus, when a number of sharp peaks do not appear (preferably, no peaks appear) in the natural vibration property, the laminated glass is judged to have no natural vibration. In this connection, in the comparative example described later (see FIG. 4), a peak also is observed in which the acceleration amplitude ratio starts increasing at a frequency less than ± 10 Hz apart therefrom. In that case, however, a prediction line is drawn on the assumption that the acceleration amplitude ratio simply decreases in the range of at least ± 10 Hz apart from the peak. Then the magnitude of the change in acceleration amplitude ratio is determined.

**<TABLE 1>**

| Example | | |
|---|---|---|
| Peak | | Magnitude of Change |
| Hz | | dB |
| 183 | -10 | 1.11 |
| | +10 | 1.67 |
| 286 | -10 | 1.11 |
| | +10 | 1.11 |

Next, a test run of an actual automobile with the laminated glass of Example 1 fitted as a front window glass was carried out. As a result, it was proved that continuous muffled noise (low-pitched resonant noise) was hardly generated during the run. That is, the front window glass with no natural vibration in the low frequency region as shown in FIG. 2 substantially does not resonate with the automobile body and therefore no large muffled noise is generated. In other words, a laminated glass including two glass sheets bonded to each other with a soft resin interlayer film having a Shore hardness of 74 degrees at 20°C has no conspicuous natural vibration found in the low frequency region. Thus, it was proved that the laminated glass had an effect of reducing muffled noise inside the automobile as compared to the result of the comparative example described later.

Finally, the laminated glass of Example 1 was crushed and the resin interlayer film was separated from the glass pieces to be collected. Then the Shore hardness at 20°C of the resin interlayer film thus collected was measured. The result was 74 degrees, which was the same as that obtained before the production of the laminated glass.

The natural vibration property of the body of the automobile can be determined by the same method as that employed in the case of the laminated glass, with an acceleration pickup being attached to the approximate center of the ceiling of the automobile body in the state of a finished car. According to the result of measurement of the natural vibration property of the automobile body that is measured beforehand, the curved laminated glass for a vehicle can be designed and produced in such a manner that the curved laminated glass for a vehicle is prevented from resonating with the automobile body.

### Example 2

A laminated glass was produced in the same manner as in Example 1, with a polyvinyl acetal monolayer (with a thickness of 0.76 mm) being used as a resin interlayer film. The polyvinyl acetal monolayer was obtained using aldehyde whose main component was n-octyl aldehyde for acetalization. The Shore hardness of this resin interlayer film at 20°C was 73 degrees as shown with triangle marks in FIG. 3. A laminated glass was produced in the same manner as in Example 1 using this resin interlayer film and then the natural vibration property thereof was determined by the same method as in Example 1. As a result, it exhibited approximately the same natural vibration property as that of the laminated glass of Example 1 in the frequency region of 20 to 500 Hz. In addition, a test run of an actual automobile with the laminated glass fitted as a front window glass was carried out. As a result, continuous large muffled noise (low-pitched resonant noise) hardly was generated during the run.

The laminated glass of Example 2 was crushed and the resin interlayer film was separated from the glass pieces to be collected. Then the Shore hardness at 20°C of the resin interlayer film thus collected was measured. The result was 73 degrees, which was the same as that obtained before the production of the laminated glass.

### Comparative Example

As in Example 1, a laminated glass was produced by interposing a 0.76-mm thick resin interlayer film between two 2.0-mm thick glass sheets that had been bent, and heating them in an autoclave to bond them with each other. The resin interlayer film used herein was a polyvinyl butyral film. The results of measurement of the Shore hardness at 20°C of the resin interlayer film of the laminated glass that was carried out by a durometer measurement are indicated with black rhombic marks in FIG. 3. The resin interlayer film had a Shore hardness of 84 degrees at 20°C and was a relatively hard film. The Shore hardness varied in the range of 92 to 79 in the temperature range of 0 to 40°C.

The natural vibration property in the low frequency region of the laminated glass was determined in the same manner as in Example 1. The result is shown in FIG. 4. In this laminated glass, a number of natural vibrations (vibration spectra) with a narrow half width of the frequency in a low frequency region of 100 to 400 Hz were found. Then the difference (the magnitude of change) between the acceleration amplitude ratio at the frequency of each natural vibration and those at the frequencies ± 10 Hz apart therefrom was checked. The resulting difference was large, specifically 3.89 dB to 12.8 dB as shown in Table 2. In addition, a test run of the same automobile as that used in Example 1 with the laminated glass fitted as a front window glass was carried out. As a result, continuous muffled noise in the low frequency region was generated inside the automobile. It was proved that a front window glass having natural vibration in a low frequency region increased muffled noise inside the automobile during the run due to the resonance and interaction with the automobile body.

**<TABLE 2>**

| Comparative Example | | |
|---|---|---|
| Peak | | Magnitude of Change |
| Hz | | dB |
| 171 | -10 | 6.67 |
| | +10 | 11.1 |
| 195 | -10 | 11.1 |
| | +10 | 10 |
| 296 | -10 | 5.56 |
| | +10 | 12.8 |
| 361 | -10 | 7.78 |
| | +10 | 7.78 |
| 443 | -10 | 5.56 |
| | +10 | 4.44 |
| 481 | -10 | 6.11 |
| | +10 | 3.89 |

The laminated glass of Comparative Example was crushed and the resin interlayer film was separated from the glass pieces to be collected. Then the Shore hardness at 20°C of the resin interlayer film thus collected was measured. The result was 84 degrees, which was the same as that obtained before the production of the laminated glass.

According to Example 1 and 2 in the above, it was proved that in order to suppress the muffled noise that was generated from the interaction between the front window glass and automobile body in an automobile during the run, a laminated glass to be used should be one having no natural vibration in a low frequency region of 20 to 500 Hz (or 100 to 400 Hz). Such a laminated glass substantially prevents the resonance phenomenon from occurring due to overlap of the natural vibration of the laminated glass with that of the automobile body. Furthermore, even when the laminated glass has natural vibration in the low frequency region, the increase in muffled noise can be prevented as long as the natural vibration of the automobile body does not overlap with the frequency thereof.

The characteristics such as the half width, peak height (depth), etc. of the natural vibration in the low frequency region of the laminated glass are determined by adjusting the thickness of the resin interlayer film and chemical structure factors of the resin interlayer film such as a polymerization degree of the resin, the type and amount of plasticizer, an acetalization degree, the amount of acetyl groups, etc. The resin interlayer film described above was formed of a plasticized polyvinyl acetal having the most preferable characteristics in practical use in terms of adhesiveness to glass sheets, safety at the time of damage, transparency, etc. However, the type of the resin interlayer film is not limited to this and can be another resin film such as a resin film whose main component is at least one of methyl methacrylate and methyl acrylate, a vinyl chloride resin film, etc.

Furthermore, the resin interlayer films with Shore hardness of 74 degrees and 73 degrees at 20°C were used for the laminated glasses of Examples 1 and 2 in the above, respectively. However, a usable resin interlayer film is not limited by the values. Preferably, the Shore hardness of the resin interlayer film at 20°C is in the range of 50 to 75 degrees. When the Shore hardness exceeds 75 degrees, the laminated glass has higher rigidity and thereby has a smaller effect of suppressing muffled noise. On the other hand, when the Shore hardness is lower than 50 degrees, the resin interlayer is excessively soft and therefore the glass sheets of a laminated glass formed of two glass sheets tend to be displaced from each other. In this case, there is a possibility of causing trouble in fitting and fixing the laminated glass to the automobile body.

The resin interlayer film with a three-layer structure described above had an overall thickness of 0.76 mm but the thickness is not limited to this. The overall thickness can be in the range of about 0.5 to 1.6 mm. In addition, it also is possible to change suitably the ratio between the thickness of the soft film located in the middle and that of the hard films located on both sides thereof.

Similarly, when a laminated glass including two glass sheets with a thinner thickness, specifically 1.8 mm, that are bonded to each other, or a laminated glass including two glass sheets that are different in thickness from each other, specifically 2.0 mm and 1.6 mm, that are bonded to each other is used from the viewpoints of weight reduction, design, etc. of the automobile, muffled noise can be suppressed in the same manner as in the above. A laminated glass formed of a combination of an inorganic glass such as float glass and a resin organic glass also can be used. Furthermore, the same effect can be obtained even when the glass sheets are laminated glass sheets provided with functions such as coloring, ultraviolet shielding, infrared shielding, hot wire for defogging, etc., in addition to transparent glass sheets.

As described above, when a laminated glass that does not have natural vibration in a low frequency region of 500 Hz or lower in the audible range is fitted and fixed to an automobile as a front window glass, muffled noise that is generated inside the automobile is reduced. Similarly, even when a laminated glass having natural vibration in a low frequency region of 500 Hz or lower has been fitted and fixed as a front window glass, muffled noise inside the automobile is not increased by preventing the natural vibration thereof from overlapping in frequency with that of the automobile body.

As described above, the laminated glass of the present invention can be used as a window glass of a vehicle such as an automobile. The vehicle of the present invention suppresses muffled noise that is generated from the body thereof while it is moving, and thereby allows the environment inside the vehicle to be an excellent sound environment.

## Claims

1. A curved laminated glass for a vehicle, comprising two curved glass sheets and a resin interlayer film that is interposed between the two curved glass sheets and bonds the two curved glass sheets to each other,
wherein the resin interlayer film has a Shore hardness of 75 degrees or less at 20°C that is obtained by durometer measurement, and the curved laminated glass has no natural vibration in a low frequency region of 500 Hz or lower in an audible range.

2. The curved laminated glass for a vehicle according to claim 1,
wherein the resin interlayer film contains polyvinyl acetal.

3. The curved laminated glass for a vehicle according to claim 1,
wherein the resin interlayer film contains polyvinyl butyral.

4. The curved laminated glass for a vehicle according to claim 1,
wherein the resin interlayer film has a three-layer structure including:
two resin films, each of which contains, as its main component, a first polyvinyl acetal that is obtained by acetalizing polyvinyl alcohol with a first aldehyde; and
a resin film that is interposed therebetween and contains, as its main component, a second polyvinyl acetal that is obtained by acetalizing polyvinyl alcohol with a second aldehyde.

5. The curved laminated glass for a vehicle according to claim 4,
wherein the first polyvinyl acetal is polyvinyl butyral.

6. The curved laminated glass for a vehicle according to claim 5,
wherein the second polyvinyl acetal is polyvinyl n-octylal.

7. A vehicle comprising a curved laminated glass for a vehicle according to claim 1 as a windshield.
